# EUROPEAN PATENT APPLICATION

(11) **EP 2 456 200 A1**
(43) Date of publication of application: **23.05.2012**
(21) Application number: 10791185.1
(22) Date of filing: 23.03.2010
(51) Int. Cl.: H04N 7/15, H04L 12/54, H04L 29/06

(54) **METHOD, DEVICE AND SYSTEM FOR VIDEO CALL ESTABLISHMENT AND VIDEO SWITCH**

(30) Priority: 27.11.2009 CN 200910109859
(71) Applicant: ZTE Corporation, Shenzhen, Guangdong 518057 (CN)
(72) Inventor: GE, Hao, Shenzhen Guangdong 518057 (CN); ZHANG, Haojun, Shenzhen Guangdong 518057 (CN); XU, Bin, Shenzhen Guangdong 518057 (CN)
(74) Representative: Gervasi, Gemma
(86) International application number: PCT/CN2010/071239
(87) International publication number: WO 2010/148679

(57) **Abstract**

The invention discloses a method for setting up a video call, comprising: a video replacement server receiving a video call request sent from a first terminal; the video replacement server setting up a conference connection to a media server according to the video call request; the video replacement server sending the video call request to a second terminal; the second terminal setting up a video call with the first terminal according to the video call request. The invention achieves video replacement by way of controlling the media server to broadcast a preset video file to the terminals on a video call using the video replacement server according to the replacing instruction input by the terminal, thus meeting the requirement of users for not wishing the home-side video to be seen by the opposite side.

## Description

### Technical Field

The present invention relates to the field of communication technology, and in particular, to a method, device and system for video call establishment and video switch.

### Background of the Related Art

IMS( IP Multimedia Subsystem )is a SIP (Session Initiation Protocol) based system, which meshes data, voice and mobile network and is the real-time service on the present packet switched domain of UMTS (Universal Mobile Telecommunication System); IMS roots the flexible service capability of IP (Internet Protocol) in a mobile telecommunication system, which has greatly enriched the capability of generating mobile services. IMS may be used in communication application to realize a video call.

During the process of implementing a video call with IMS, when users do not wish to make the opposite party see the local situation in a video call, the existing IMS video call can not meet the requirement of users.

### Summary of the Invention

One of the purposes of the invention is to provide a method, device and system for video switch that can display some videos on the opposite terminal to replace the home-side video according to the user's configuration and do not influence the normal voice call function, and corresponding method and system for setting up a video call.

To achieve the above purpose, the technical scheme of the invention is implemented as follows:
a method for setting up a video call, comprising:
   a video replacement server receiving a video call request sent from a first terminal, and setting up a conference connection to a media server according to the video call request;
   the video replacement server sending the video call request to a second terminal;
   the second terminal setting up a video call with the first terminal according to the video call request.

Before the operation of the video replacement server receiving the video call request sent from the first terminal, the method comprises:
the first terminal sending the video call request to a core network;
the core network judging whether the first terminal or the second terminal involved in the video call request has subscribed a video replacement service;
when either one of the first terminal and the second terminal has subscribed the video replacement service, the core network forwarding the video call request to the video replacement server.

The operation of the video replacement server setting up the conference connection to the media server according to the video call request comprises:
the video replacement server sending the video call request to the second terminal;
the second terminal sending a 180 message to the video replacement server;
the video replacement server sending the video call request to the media server;
after making a media consultation, the media server sending a 200OK message to the video replacement server.

The operation of the second terminal setting up the video call with the first terminal according to the video call request comprises:
the video replacement server obtaining a calling medium according to the video call request, and making a media consultation with the media server;
the video replacement server obtaining a called medium according to the video call request, and making a media consultation with the media server;
the video replacement server sending consulted media of the media server to a calling terminal and a called terminal respectively;
the video replacement server putting consulted calling medium and called medium in a same conference section, and the calling terminal and the called terminal making the video call.

A method for implementing video replacement, comprising:
a first terminal having set up a video call sending a video replacing instruction to a media server;
the media server reporting the obtained video replacing instruction to a video replacement server;
the video replacement server, according to the video replacing instruction, controlling the media server to broadcast a preset video file to a second terminal.

The above reporting operation comprises:
the media server sending a first Info message carrying the video replacing instruction to the video replacement server.

The operation of the video replacement server, according to the video replacing instruction, controlling the media server to broadcast a preset video file to a second terminal comprises:
the video replacement server sending a second Info message to the media server to instruct the media server to broadcast the preset video file to the second terminal on a video call with the first terminal;
the media server returning a 200OK message to the video replacement server;
the media server broadcasting the video file to the second terminal.

The method further comprises:
the first terminal sending a video replacing stopping instruction to the media server;
the media server sending a third Info message carrying the video replacing stopping instruction to the video replacement server;
the video replacement server sending a fourth Info message to the media server to instruct the media server to stop broadcasting the video file;
the media server stopping broadcasting the video file, and recovering the video call between the first terminal and the second terminal.

A video replacement server, comprising:
a receiving module, which is configured to receive a video call request sent from a calling terminal;
a conference connecting module, which is configured to set up a conference connection to a media server according to the video call request;
a sending module, which is configured to send the video call request to a called terminal to make the called terminal set up a video call with the calling terminal according to the video call request.

A system for setting up a video call, comprising a first terminal, a video replacement server, a media server and a second terminal, wherein,
the first terminal is configured to send a video call request;
the video replacement server is configured to receive the video call request; set up a conference connection to the media server according to the video call request; send the video call request to the second terminal;
the second terminal is configured to set up a video call with the first terminal according to the video call request.

A system for video replacement in a video call, comprising a first terminal and a second terminal having set up the video call, a video replacement server and a media server, wherein,
the first terminal is configured to send a video replacing instruction;
the media server is configured to obtain the video replacing instruction, and send the video replacing instruction to the video replacement server;
the video replacement server is configured to control the media server to broadcast a preset video file to a second terminal according to the video replacing instruction.

The media server comprises:
a first receiving module, which is configured to receive the video replacing instruction;
a first Info message module, which is configured to send a first Info message carrying the video replacing instruction to the video replacement server according to the video replacing instruction.

The video replacement server comprises:
a second receiving module, which is configured to receive the first Info message;
a second Info message module, which is configured to, after the second receiving module receives the first Info message, send a second Info message to the media server to instruct the media server to broadcast the preset video file to the second terminal on a video call with the first terminal.

The first receiving module is further configured to receive the second Info message; the media server further comprises:
a broadcasting module, which is configured to broadcast the preset video file to the second terminal after the first receiving module receives the second Info message.

The first terminal is further configured to send a video replacing stopping instruction to the media server;
the media server is further configured to send a third Info message carrying the video replacing stopping instruction to the video replacement server;
the video replacement server is further configured to send a fourth Info message to the media server to instruct the media server to stop broadcasting the video file;
the media server is further configured to stop broadcasting the video file and recover the video call between the first terminal and the second terminal.

The invention achieves video replacement by way of controlling the media server to broadcast a preset video file to the terminals on a video call using the video replacement server according to the replacing instruction input by the terminal, thus meeting the requirement of users for not wishing the home-side video to be seen by the opposite side.

### Brief Description of Drawings

FIG.1 is a flowchart of signaling of an example of the method for setting up a video call in the invention.
FIG.2 is a flowchart of signaling of an example of the method for implementing video replacement in the invention.
FIG.3 is a flowchart of signaling of a specific example of the method for setting up a video call and implementing video replacement in the invention.
FIG.4 is a schematic diagram of the structure of an example of a video replacement server in the invention.
FIG.5 is a schematic diagram of the structure of an example of the system for setting up a video call in the invention.
FIG.6 is a schematic diagram of the structure of an example of the system for video replacement in a video call in the invention.
FIG.7 is a schematic diagram of a specific example of the system for video replacement in a video call in the invention.

### Preferred Embodiments of the Present Invention

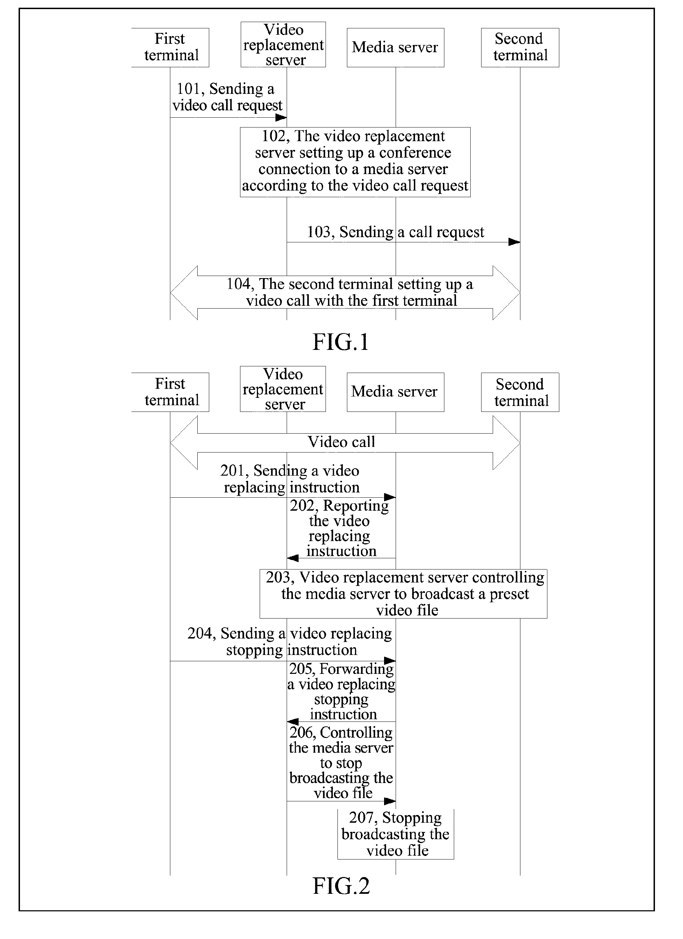

As shown in FIG.1, it is a flowchart of signaling of an example of the method for setting up a video call in the invention.

Step 101, the first terminal sending a video call request to a video replacement server.

Specifically, the first terminal sends the video call request to a core network, and the core network judges whether the first terminal and the called terminal corresponding to the video call request have subscribed a video replacement service. When the calling terminal has subscribed the video replacement service, or the called terminal has subscribed the video replacement service, or both the calling terminal and the called terminal have subscribed the video replacement service, the core network will forward the video call request to the video replacement server.

Step 102, the video replacement server setting up a conference connection to a media server according to the video call request.

Furthermore, step 102 may comprise:
A1, the video replacement server sending the video call request to the second terminal;
B1, the second terminal sending a 180 message the video replacement server;
C1, the video replacement server sending the video call request to the media server;
D1, after making a media consultation, the media server sending a 200OK message to the video replacement server.

Step 103, the video replacement server sending the video call request to the second terminal.

Step 104, the second terminal setting up a video call with the first terminal according to the video call request.

Specifically, the step 104 may further comprise:
A2, the video replacement server making a media consultation with the media server after obtaining a calling medium according to the video call request;
B2, the video replacement server making a media consultation with the media server after obtaining a called medium according to the video call request;
C2, the video replacement server sending consulted media of the media server to the first terminal and a called terminal respectively;
D2, the video replacement server putting consulted calling medium and called medium in the same conference section, and the calling terminal and the called terminal making the video call.

The example of the invention sets up a video connection to the terminals that have subscribed the video replacement service by using a video replacement server, and the video replacing operation may be performed when needed according to the connection. The further video replacing method is as shown in the following example.

With reference to FIG.2, it is a flowchart of signaling of an example of the method for implementing video replacement in the invention.

Step 201, the first terminal having set up a video call sending a video replacing instruction to a media server;
after the first terminal has set up a video call with the second terminal, the first terminal needs to use the video replacement service (the first terminal may be the calling terminal or the called terminal), and sends a video replacing instruction by pressing a preset specified pressing key (for example, the * key).

Step 202, the media server reporting the video replacing instruction to the video replacement server after obtaining the video replacing instruction.

After the user pressed the * key of the first terminal, the first terminal sends a video replacing instruction to the media server, and the media server reports the video replacing instruction to the video replacement server after receiving the video replacing instruction.

Step 203, the video replacement server, according to the video replacing instruction, controlling the media server to broadcast a preset video file.

After receiving the video replacing instruction, the video replacement server controls the media server to broadcast the preset video file to the second terminal. Thus, what is displayed on the display interface of the second terminal is not the video taken by the camera of the first terminal any more but the preset video file broadcasted by the media server.

After the video replacement service is achieved in step 203, the following steps may be executed when the user wants to quit the video replacement service.

Step 204, the first terminal sending a video replacing stopping instruction to the media server;
when the user of the first terminal needs to stop the video replacement service, the approach similar to that of the step 201 may be used, that is, pressing a preset pressing key (for example, the # key). Then, after the user pressed the # key, the first terminal sends the video replacing stopping instruction to the media server.

Step 205, the media server forwarding the video replacing stopping instruction to the video replacement server;
after receiving the video replacing stopping instruction, the media server sends an Info message to the video replacement server, and the Info message carries the video replacing stopping instruction.

Step 206, the video replacement server controlling the media server to stop broadcasting the video file;
after receiving the Info message sent by the media server, the video replacement server firstly returns a 200 OK message as a response to the media server, and then sends an Info message to the media server to instruct the media server to stop broadcasting the video file;

Step 207, the media server stops broadcasting the video file.

After receiving the Info message sent by the video replacement server, the media server stops broadcasting the video file and recovers the video call between the first terminal and the second terminal.

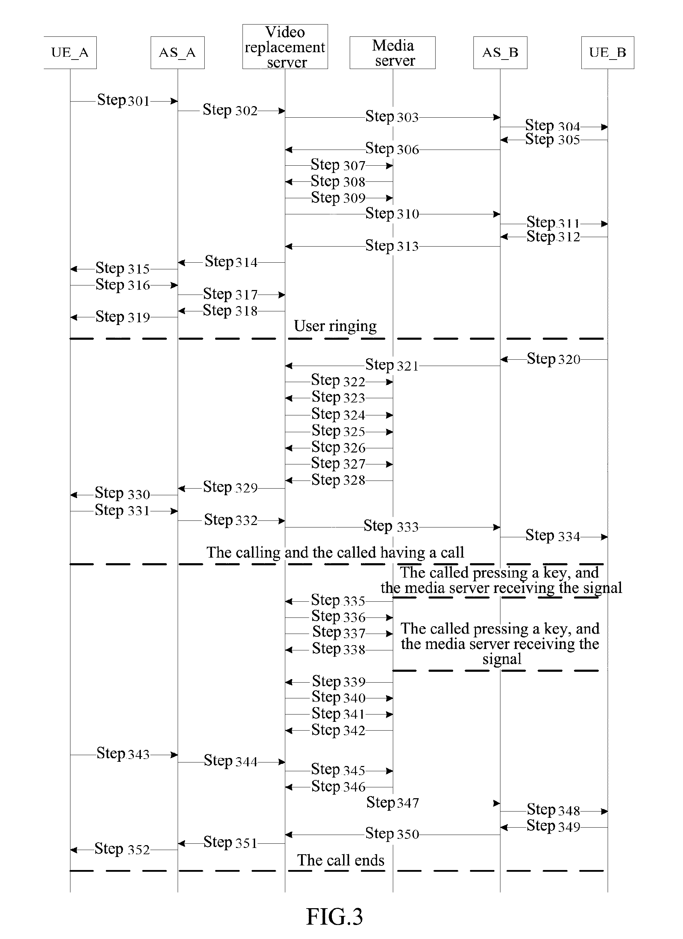

The invention achieves video replacement by way of controlling the media server to broadcast a preset video file to the terminals on a video call using the video replacement server according to the replacing instruction input by the terminal, thus meeting the requirement of users for not wishing the home-side video to be seen by the opposite side. With reference to FIG.3, it is a flowchart of signaling of an example of the method for setting up a video call and implementing video replacement in the invention.

The setting up of the video call and the implementation of the video replacement service will be further described in detail with reference to this example in combination with the above two examples. In the example, UE_A represents a calling terminal, UE_B represents a called terminal, AS_A represents a calling terminal side core network, AS_B represents a called terminal side core network.

Step 301, UE_A sends an Invite message carrying the media ofUE_A sdpA to AS_A;
the calling user UE_A initiates a video call by sending the Invite message to AS_A.

Step 302, AS_A judges that the called has subscribed the video replacement service, and then sends the Invite message carrying the media of UE_A sdpA to the video replacement server.

Step 303, the video replacement server sends the Invite message to AS_B;
the video replacement server triggers the video replacement service, and inquires the video replacing file configured by UE_B user and sends the searched Invite message to AS_B to call the called.

Step 304, AS_B forwards the Invite message to UE_B.

Step 305, UE_B sends a 180 message to AS_B to indicate that the called is idle.

Step 306, AS_B sends a 180 message to the video replacement server.

Step 307, the video replacement server sends an Invite message carrying the sdpA to the media server.

Step 308, the media server returns a 200 OK message to the video replacement server.

After media consultation, the media server replies the 200 OK message (the response to the Invite message) carrying the media sdpCA consulted with UE_A to the video replacement server.

Step 309, the video replacement server sends an Ack message to the media server.

Step 310, the video replacement server sends a Prack message to AS_B to indicate a confirmation for the 180 message.

Step 311, AS_B sends the Prack message to UE_B to indicate a confirmation for the 180 message.

Step 312, UE_B returns a 200 OK message to AS_B to indicate a response to the Prack message.

Step 313, AS_B forwards the 200 OK message to the video replacement server.

Step 314, the video replacement server sends the 180 message to AS_A;

Step 315, AS_A forwards the 180 message to UE_A.

Step 316, UE_A sends the Prack message to AS_A to indicate a confirmation for the 180 message.

Step 317, AS_A forwards the Prack message to the video replacement server.

Step 318, the video replacement server replies the 200OK message to AS_A to indicate a response to the Prack message.

Step 319, AS_A forwards the 200OK message to UE_A.

At the moment, the calling procedure has been completed, the calling terminal bells, and the called terminal begins to ring.

Step 320, after the called terminal answers, UE_B sends the 200 OK message to AS_B. The 200 OK message carries sdpB to indicate a response of the Invite message.

Step 321, AS_B forwards the 200 OK message to the video replacement server.

Step 322, the video replacement server sends an Invite message carrying sdpB to the media server.

Step 323, the media server returns the 200 OK message (a response to the Invite message) to the video replacement server after the media consultation, wherein, the 200 OK message carries the media sdpCB consulted with UE_B.

Step 324, the video replacement server sends an Ack message to the media server.

Step 325, the video replacement server sends an Info message to the media server to create a conference and add a conference member (the calling terminal).

Step 326, the video replacement server returns a 200 OK message (a response to the Info message) to the video replacement server.

Step 327, the video replacement server sends the Info message to the media server to add a conference member (the called terminal).

Step 328, the media server returns a 200 OK message (a response to the Info message) to the video replacement server.

Step 329, the video replacement server sends a 200 OK message (a response to the Info message) carrying sdpCA to AS_A.

Step 330, AS_A forwards the 200 OK message to the UE_A.

Step 331, UE_A sends the Ack message to AS_A to indicate a confirmation for the 200 OK message.

Step 332, AS_A forwards the 200 OK message to the video replacement server.

Step 333, the video replacement server sends the Ack message carrying sdpCB to AS_B.

Step 334, AS_B forwards the Ack message to UE_B.

So far to the step 334, the calling terminal UE_A and the called terminal UE_B perform a video call in one conference section.

Step 335, UE_B sends a video replacing instruction to the video replacement server via the media server.

Specifically, UE_B wants to start the video replacing function, and presses some pressing key (for example, the * key). A pressing key signal is sent to the media server through a media stream. The media server detects the pressing key signal and sends an Info message carrying the pressing key signal to the video replacement server. The pressing key signal is taken as the video replacing instruction.

Further more, if UE_A also subscribes the video replacement service, the UE_A may also send the video replacing instruction.

Step 336, the video replacement server returns a 200 OK message (a response to the Info message) to the media server.

Step 337, the video replacement server controls the media server to broadcast the preset video file to UE_A.

The video replacement server judges that the pressing key is the key for starting the video replacement service and sends an Info message to the media server to instruct the media server to broadcast the video file inquired in step 303 to UE_A, but UE_A still listens to the voice of UE_B.

Step 338, the media server returns a 200 OK message and broadcasts the preset video file.

The media server returns a 200 OK message (a response to the Info message) to the video replacement server. The media server begins to broadcast the video file to the calling user.

When UE_B user needs to stop the video replacement service, the following steps may be executed:
Step 339, UE_B sends a video replacing stopping instruction to the video replacement server through the media server;
when UE_B wants to stop the video replacement service, a certain digital key (for example, the # key) is pressed and a pressing key signal is sent to the media server through a media stream. The media server detects the pressing key signal and sends an Info message to the video replacement server, wherein, the Info message carries the pressing key signal.

Step 340, the video replacement server returns 200OK message (a response to the Info message) to the media server.

Step 341, the video replacement server controls the media server to stop broadcasting the preset video file;
the video replacement server judges that the pressing key is the key for stopping the video replacement service, and sends an Info message to the media server to instruct the media server to recover the video call.

Step 342, the media server returns 200 OK message to the video replacement server and stops broadcasting the video file.

The media server returns a 200 OK message (a response to the Info message) to the video replacement server. The calling and the called continue the video call.

Step 343, UE_A sends a Bye message to AS_A.

When UE_A user needs to hang up, UE_A sends a Bye message to AS_A; likewise, when UE_B user needs to hang up, UE_B sends a Bye message to AS_B; description will be made in the following steps by taking the UE_A sending the Bye message to AS_A as an example.

Step 344, AS_A forwards the Bye message to the video replacement server.

Step 345, the video replacement server sends the Bye message to the media server to indicate end of the call and releases resources.

Step 346, the media server returns a 200 OK message (a response to the Bye message) to the video replacement server to release resources.

Step 347, the video replacement server sends the Bye message to AS_B to indicate that the call is over.

Step 348, AS_B forwards the Bye message to UE_B to indicate end of the call and releases resources.

Step 349, UE_B returns a 200 OK message (a response to the Bye message) to AS_B.

Step 350, AS_B forwards the 200 OK message (a response to the Bye message) to the video replacement server.

Step 351, the video replacement server returns the 200 OK message (a response to the Bye message) to AS_A.

Step 352, AS_A forwards the 200 OK message (a response to the Bye message) to UE_A.

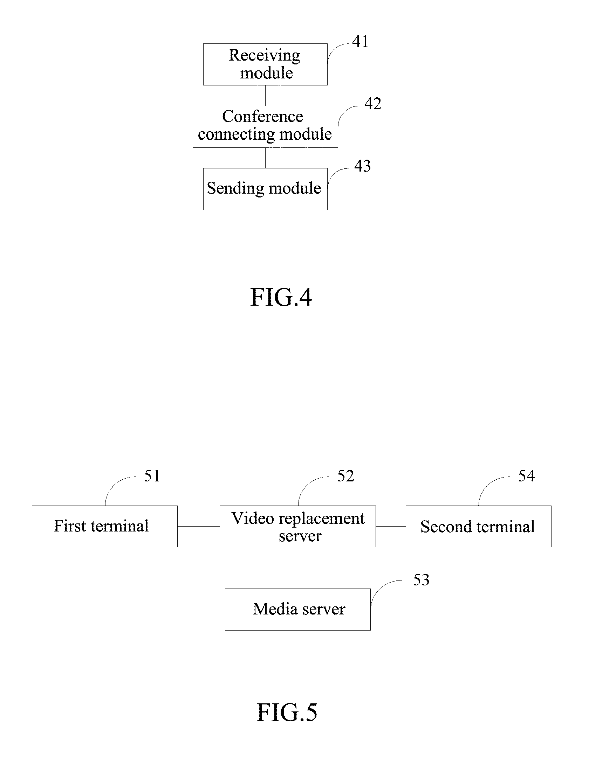

In this example of the present invention, a video connection between terminals that have subscribed the video replacement service is established using a video replacement server, and the video replacement server controls the media server to broadcast a preset video file to the terminal on a video call according to the replacing instruction input by the terminal, thus meeting the requirement of users for not wishing the home-side video to be seen by the opposite side. With reference to FIG.4, it is a schematic diagram of the structure of an example of the video replacement server.

The present example is the video replacement server for implementing the method for setting up a video call in example one, and the video replacement server comprises:
a receiving module 41, which is configured to receive a video call request sent from a calling terminal;
a conference connecting module 42, which is configured to set up a conference connection to a media server according to the video call request;
a sending module 43, which is configured to send the video call request to a called terminal to make the called terminal set up a video call with the calling terminal according to the video call request.

With reference to FIG.5, it is a schematic diagram of the structure of an example of the system for setting up a video call.

The present example provides the system for setting up a video call to implement the method for setting up a video call in example one.

The system for setting up a video call comprises a first terminal 51, a video replacement server 52, a media server 53 and a second terminal 54:
the first terminal 51 is configured to send a video call request;
the video replacement server 52 is configured to receive the video call request; set up a conference connection to the media server 53 according to the video call request; send the video call request to the second terminal 54;
the second terminal 54 is configured to set up a video call with the first terminal 51 according to the video call request.

Specifically, the first terminal 51 connects and communicates with the video replacement server 52 through the first core network 55; likewise, the second terminal 54 connects and communicates with the video replacement server 52 through the second core network 6.

Specifically, the first terminal 51 sends the video call request to the first core network 55, the first core network 55 judges whether the calling terminal (i.e. the first terminal 51) and the called terminal (i.e. the second terminal 54) corresponding to the video call request have subscribed the video replacement service. When the calling terminal has subscribed the video replacement service, or the called terminal has subscribed the video replacement service, or both the calling terminal and the called terminal have subscribed the video replacement service, the first core network 55 will forward the video call request to the video replacement server 52.

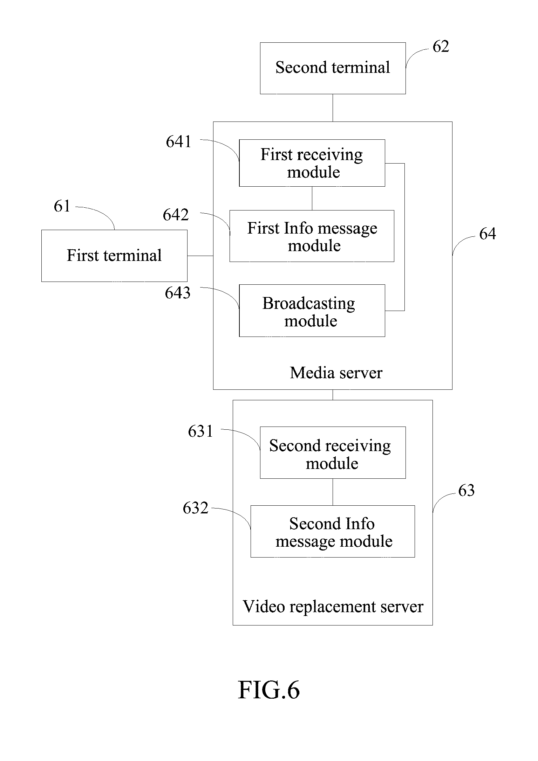

With reference to FIG.6, it is a schematic diagram of the structure of an example of the system for video replacement in a video call.

The present example provides the system for video replacement in a video call to implement the method for implementing video replacement in the example two.

The system for video replacement in a video call comprises:
a first terminal 61 and a second terminal 62 having set up a video call, a video replacement server 63 and a media server 64, wherein,
the first terminal 61 is configured to send a video replacing instruction;
the media server 64 is configured to obtain the video replacing instruction, and send the video replacing instruction to the video replacement server 63;
the video replacement server 63 is configured to control the media server 64 to broadcast a preset video file to the second terminal 62 according to the video replacing instruction.

After the first terminal 61 sets up a video call with the second terminal 62, the first terminal 61 needs to use the video replacement service (the first terminal 61 may be the calling terminal or the called terminal), and sends a video replacing instruction by pressing a preset specified pressing key (for example, the * key).

After the user pressed the * key of the first terminal 61, the first terminal 61 sends a video replacing instruction to the media server 64, and the media server 64 reports the video replacing instruction to the video replacement server 63 after receiving the video replacing instruction.

After receiving the video replacing instruction, the video replacement server 63 controls the media server 64 to broadcast the preset video file to the second terminal 62. Thus, what is displayed on the display interface of the second terminal 62 is not the video taken by the camera of the first terminal 61 any more but the preset video file broadcasted by the media server 64.

Furthermore, the media server 64 may further comprise:
a first receiving module 641, which is configured to receive the video replacing instruction;
a first Info message module 642, which is configured to send a first Info message carrying the video replacing instruction to the video replacement server according to the video replacing instruction.

The video replacement server 63 comprises:
a second receiving module 631, which is configured to receive the first Info message;
a second Info message module 632, which is configured to, after the second receiving module receives the first Info message, send a second Info message to the media server to instruct the media server to broadcast the preset video file to the second terminal 62 on a video call with the first terminal.

The first receiving module 641 is further configured to receive the second Info message; the media server 64 further comprises:
a broadcasting module 643, which is configured to broadcast the preset video file to the second terminal 62 after the first receiving module receives the second Info message.

The first terminal 61 is further configured to send a video replacing stopping instruction to the media server 64;
the media server 64 is further configured to send a third Info message carrying the video replacing stopping instruction to the video replacement server 63;
the video replacement server 63 is further configured to send a fourth Info message to the media server 64 to instruct the media server 64 to stop broadcasting the video file;
the media server 64 is further configured to stop broadcasting the video file and recover the video call between the first terminal and the second terminal.

When the user of the first terminal 61 needs to stop the video replacement service, a preset pressing key (for example, the # key) is pressed. Then, after the user pressed the # key, the first terminal 61 sends the video replacing stopping instruction to the media server 64.

After receiving the video replacing stopping instruction, the media server 64 sends an Info message to the video replacement server 63, and the Info message carries the video replacing stopping instruction. After receiving the Info message sent by the media server 64, the video replacement server 63 firstly returns a 200 OK message as a response to the media server 64, and then sends an Info message to the media server 64 to instruct the media server 64 to stop broadcasting the video file. After receiving the Info message sent by the video replacement server 63, the media server 64 stops broadcasting the video file and recovers the video call between the first terminal 61 and the second terminal 62.

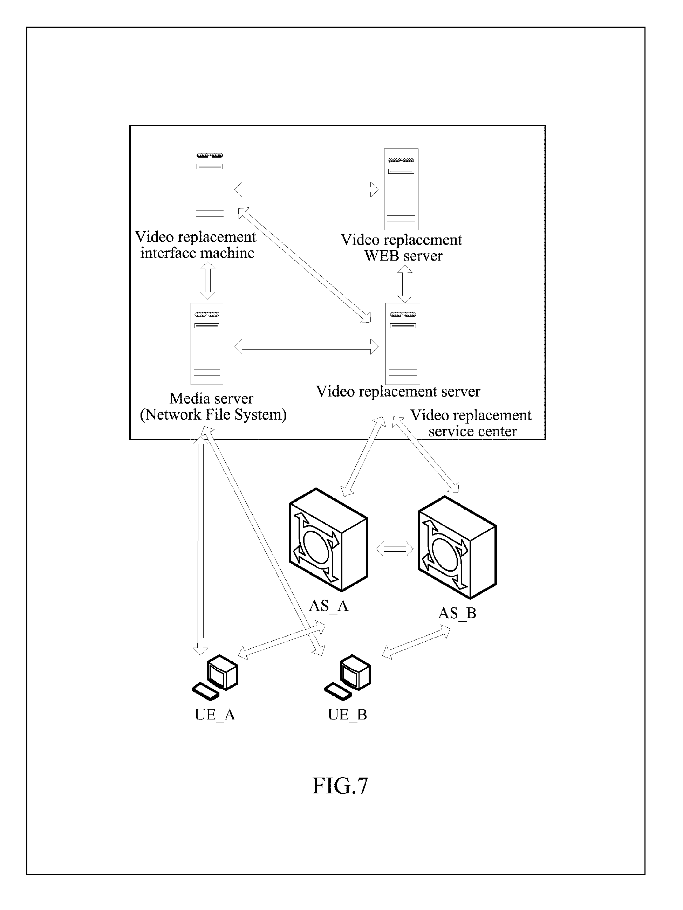

With reference to FIG.7, it is a schematic diagram of a specific example of the system for video replacement in a video call.

Wherein, the video replacement service center comprises a video replacement server, a video replacement WEB server, a video replacement interface machine and a media server (Network File System).

The video replacement server is configured to complete service logical control of IMS-domain video replacement service, complete the storage and inquiry of service data, complete the control of media server, and the video replacement server further needs to provide the interface to the WEB server to allow operators or terminal users to make authorized custom amendments on the service data of the video replacement service server.

The video replacement WEB server: the video replacing system provides an interface for operators or users by way of WEB. The video replacement WEB server is mainly responsible for allowing the administrator to make custom amendments to the video replacement service data and the upload of video replacing files; and is also responsible for allowing the video replacing user to perform operations such as previewing the video replacing file, ordering, setting and so on.

The video replacement interface machine is configured to send operations such as the audition, ordering and setting performed by users to the video replacement managing service to process, and the video replacement interface machine sends the video replacing files uploaded by WEB to NFS, and the short message interface machine accesses the video replacement service system into a short message center.

The media server (NFS) completes the control signaling interaction with the video replacement service server, and completes the broadcasting of video files according to a predetermined mode, and its NFS completes the storage of the uploaded video replacement resource files.

UE: a user IMS terminal. UE_A represents a calling terminal, UE_B represents a called terminal.

AS: devices in core network, mainly comprises HSS and CSCF. HSS is responsible for storing the subscription information of IMS users, comprising basic identifiers, routing information and other data; CSCF is responsible for basic session route function. AS_A is the calling AS, and AS_B is the called AS.

The system provided in the system may achieve the function of video replacement in a video call by using the method provided in the example three.

The above examples are just preferred examples of the invention, and are not intended to limit the protection scope of the invention. Any equivalent structure or equivalent procedure variation made by using the content in the specification or drawings of the invention, and applied directly or indirectly in other related technical fields, should be comprised in the scope of the protection scope of the invention.

## Claims

1. A method for setting up a video call, the method comprising:
a video replacement server receiving a video call request sent from a first terminal, and setting up a conference connection to a media server according to the video call request;
the video replacement server sending the video call request to a second terminal;
the second terminal setting up a video call with the first terminal according to the video call request.

2. The method for setting up a video call according to claim 1, wherein, before the operation of the video replacement server receiving the video call request sent from the first terminal, the method comprises:
the first terminal sending the video call request to a core network;
the core network judging whether the first terminal or the second terminal involved in the video call request has subscribed a video replacement service;
when either one of the first terminal and the second terminal has subscribed the video replacement service, the core network forwarding the video call request to the video replacement server.

3. The method for setting up a video call according to claim 1, wherein, the operation of the video replacement server setting up the conference connection to the media server according to the video call request comprises:
the video replacement server sending the video call request to the second terminal;
the second terminal sending a 180 message to the video replacement server;
the video replacement server sending the video call request to the media server;
after making a media consultation, the media server sending a 200OK message to the video replacement server.

4. The method for setting up a video call according to claim 1, wherein, the operation of the second terminal setting up the video call with the first terminal according to the video call request comprises:
the video replacement server obtaining a calling medium according to the video call request, and making a media consultation with the media server;
the video replacement server obtaining a called medium according to the video call request, and making a media consultation with the media server;
the video replacement server sending consulted medium of the media server to a calling terminal and a called terminal respectively;
the video replacement server putting consulted calling medium and called medium in a same conference section, and the calling terminal and the called terminal making the video call.

5. A method for implementing video replacement, comprising:
a first terminal having set up a video call sending a video replacing instruction to a media server;
the media server reporting the obtained video replacing instruction to a video replacement server;
the video replacement server, according to the video replacing instruction, controlling the media server to broadcast a preset video file to a second terminal.

6. The method for implementing video replacement according to claim 5, wherein, the operation of reporting comprises:
the media server sending a first Info message carrying the video replacing instruction to the video replacement server.

7. The method for implementing video replacement according to claim 6, wherein, the operation of the video replacement server, according to the video replacing instruction, controlling the media server to broadcast a preset video file to a second terminal comprises:
the video replacement server sending a second Info message to the media server to instruct the media server to broadcast the preset video file to the second terminal on a video call with the first terminal;
the media server returning a 200OK message to the video replacement server;
the media server broadcasting the video file to the second terminal.

8. The method for implementing video replacement according to claim 5, wherein, the method further comprises:
the first terminal sending a video replacing stopping instruction to the media server;
the media server sending a third Info message carrying the video replacing stopping instruction to the video replacement server;
the video replacement server sending a fourth Info message to the media server to instruct the media server to stop broadcasting the video file;
the media server stopping broadcasting the video file, and recovering the video call between the first terminal and the second terminal.

9. A video replacement server, comprising:
a receiving module, which is configured to receive a video call request sent from a calling terminal;
a conference connecting module, which is configured to set up a conference connection to a media server according to the video call request;
a sending module, which is configured to send the video call request to a called terminal to make the called terminal set up a video call with the calling terminal according to the video call request.

10. A system for setting up a video call, comprising a first terminal, a video replacement server, a media server and a second terminal, wherein,
the first terminal is configured to send a video call request;
the video replacement server is configured to receive the video call request and set up a conference connection to the media server according to the video call request; send the video call request to the second terminal;
the second terminal is configured to set up a video call with the first terminal according to the video call request.

11. A system for video replacement in a video call, comprising a first terminal and a second terminal having set up the video call, a video replacement server and a media server, wherein,
the first terminal is configured to send a video replacing instruction;
the media server is configured to obtain the video replacing instruction, and send the video replacing instruction to the video replacement server;
the video replacement server is configured to control the media server to broadcast a preset video file to the second terminal according to the video replacing instruction.

12. The system for video replacement in a video call according to claim 11, wherein, the media server comprises:
a first receiving module, which is configured to receive the video replacing instruction;
a first Info message module, which is configured to send a first Info message carrying the video replacing instruction to the video replacement server according to the video replacing instruction.

13. The system for replacing video in a video call according to claim 12, wherein, the video replacement server comprises:
a second receiving module, which is configured to receive the first Info message;
a second Info message module, which is configured to, after the second receiving module receives the first Info message, send a second Info message to the media server to instruct the media server to broadcast the preset video file to the second terminal on a video call with the first terminal.

14. The system for replacing video in a video call according to claim 13, wherein, the first receiving module is further configured to receive the second Info message; the media server further comprises:
a broadcasting module, which is configured to broadcast the preset video file to the second terminal after the first receiving module receives the second Info message.

15. The system for video replacement in a video call according to claim 11, wherein, the first terminal is further configured to send a video replacing stopping instruction to the media server;
the media server is further configured to send a third Info message carrying the video replacing stopping instruction to the video replacement server;
the video replacement server is further configured to send a fourth Info message to the media server to instruct the media server to stop broadcasting the video file;
the media server is further configured to stop broadcasting the video file and recover the video call between the first terminal and the second terminal.
